# EUROPEAN PATENT APPLICATION

(11) **EP 2 149 395 A1**
(43) Date of publication of application: **03.02.2010**
(21) Application number: 08305441.1
(22) Date of filing: 31.07.2008
(51) Int. Cl.: A63F 13/12, G06Q 30/00, G06F 17/30

(54) **Method for extending an object from a first world to a second world, and a related data storage means and machine**

(71) Applicant: Alcatel Lucent, 75008 Paris (FR)
(72) Inventor: Stevens, Christoph, 9190, Stekene (BE); Liekens, Werner, 2860, Sint-Katelijne-Waver (BE); Justen, Pascal, 1150, Brussel (BE); Coppens, Jan, 9000, Gent (BE); Acke, Willem, 2820, Rijmenam (BE)
(74) Representative: D'Halleweyn, Nele Veerle Trees Gertrudis

(57) **Abstract**

A method is described for associating an object in a first world with an extension of the object in a second world, comprising;
- defining a predetermined set of objects in the first world;
- generating a unique identification for each object of the predetermined set of objects;
- generating an object translation adapted for use in the second world, for each object of the predetermined set of objects;
- storing the unique identification and the translation for the predetermined set of objects in a data storage means;
- transferring a selected object of the predetermined set of objects, selected by a user, having a user profile in a second world, to the user in the first world;
- providing an extension of the selected object into the second world, the extension comprising at least the respective selected object translation, by retrieving the selected object translation in the data storage means and adding it to the user profile in the second world, based on the selected object identification.

A data storage means and a machine for use in the method are also disclosed.

## Description

### Technical field of the invention

The present invention relates to the field of extending objects belonging to a user in a first world towards a second world different from said first world.

### Background of the invention

A world can be the real world, i.e. our everyday physical world, or can be a virtual world (digital world). In a virtual world, a community of entities/users can interact according to certain principles, rules and formats, and entities present therein can typically display, share, transfer, source, deliver, sell, buy, and manipulate virtual objects, not tangible to a physical person, as for instance digital letters, newspapers, pictures, 3 D models, etc. Real objects are objects of the real world and are typically tangible objects which can be manipulated by a real person or real entity; e.g. goods, gifs, packages, paperwork, etc.

Today different virtual world providers exist, as for instance Second Life from Linden Labs, or the Sony Home Project.

Today, a user who acquires a real life object cannot take this with him when he visits his friends in those virtual worlds (VW). Also objects acquired by the user in his first virtual world, are not part of a second virtual world from that user.

This means that currently, people have to either create the objects themselves in the respective virtual worlds or buy a similar virtual object, which is already created for them by the virtual world provider, in their virtual world.

This makes the use of virtual worlds less attractive, as it does show a limited interaction capability with other virtual worlds or the real world.

There exists a need for solutions which make the use of virtual worlds more attractive and which allow new business models.

There exists a need for solutions which provide an extended interaction between different worlds.

### Summary of the invention

When terms as "first", "second", "third" and the like are used, this does not necessarily mean that a sequential or that a chronological order is to be assumed.

The term "comprising", should be interpreted as such that it does not exclude other elements or steps.

According to a first aspect of the present invention, a first embodiment is disclosed comprising a method for associating an object in a first world with an extension of the object in a second world, comprising:
- defining a predetermined set of objects in the first world;
- generating a unique identification for each object of the predetermined set of objects;
- generating an object translation adapted for use in the second world, for each object of the predetermined set of objects;
- storing the unique identification and the translation for the predetermined set of objects in a data storage means;
- transferring a selected object of the predetermined set of objects, selected by a user, having a user profile in a second world, to the user in the first world;
- providing an extension of the selected object into the second world, the extension comprising at least the respective selected object translation, by retrieving the selected object translation in the data storage means and adding it to the user profile in the second world, based on the selected object identification.

The user (e.g. a customer) can be for instance a physical or legal entity as for instance persons, companies, organisations, etc.

According to embodiments of the present invention, the translation may comprise for instance, but not only (information allowing) a visual representation of the object in the second world (e.g. 2D or 3D, appropriate styling), and/or value information for the object (possibly in the second world) or for example object data linked to 2^{nd} world account data. This provides the advantage that property and value acquired in first world can be transferred to a second world, allowing new business models.

Typical object identifications may be RFID identifications, or any technical implementation in which a serial number or numbers are attached to an object. The object identifications may be generated and/or provided by an object provider. In embodiments according to the present invention, the second world is controlled by a second world provider, and the predetermined set of objects is owned by a object set owner, the method of the first embodiment further comprises;
- providing the selected object identification to the user by the object set owner;
- providing the selected object identification to the second world provider by the user;
- providing the selected object identification to the storage means by the second world provider;
- providing the translation of the selected object to the second world provider by the storage means.

This method may further comprise providing the selected object identification by the object set owner to the data storage means, confirming the transfer of the object to the user in the first world. This may provide means for securing that the object for which the user has requested extension in a second world has not been stolen.

In other embodiments according to the present invention, wherein the second world is controlled by a world provider, and wherein the predetermined set of objects is owned by a object set owner, the method according to the first embodiment further comprises:
- providing a user identification to the object set owner by the user;
- providing the user identification and the selected object identification to the storage means;
- logging in by the user in the second world, comprising providing the user identification to the second world provider;
- retrieving the selected object translation by the second world provider from the data storage means, based on the user identification.

In embodiments according to the present invention, wherein the second world is controlled by a world provider, and wherein the predetermined set of objects is owned by a object set owner, the method according to the first embodiment further comprises
- providing a user identification to the object set owner by the user;
- providing the user identification and the selected object identification to the storage means by the object set owner;
- logging in by the user in the second world, comprising providing the user identification to the second world provider;
- pushing (or providing) the selected object translation from the storage means to the second world provider, based on said user identification.

In embodiments according to the present invention, wherein the second world is controlled by a world provider, and wherein the predetermined set of objects is owned by a object set owner, the method according to the first embodiment further comprises
- providing a user identification to the object set owner by the user;
- providing the user identification and the selected object identification to the second world provider;
- retrieving the selected object translation from the data storage means by the second world provider, based on said object identification.

In embodiments of the present invention, the first world is the real world and the second world is a virtual world.

In embodiments of the present invention, the first world is a virtual world and the second world is a real world. In embodiments of the present invention, the first world is a first virtual world and the second world is a second virtual world.

In embodiments of the present invention, the objects comprise or consist of virtual objects and the object translations comprise or consist of real objects.

In embodiments of the present invention, wherein preferably the first world is the real world and the second world is a virtual world, the predetermined set of objects corresponding to a finite set of articles which are for sale, for instance in a real (e.g. online) shop. According to a second aspect of the present invention, a data storage means is disclosed, comprising a predetermined set of object identifications and a corresponding set of object translations, arranged and/or adapted for allowing access to it by a virtual world provider.

In embodiments of the present invention, the predetermined set of object identifications and the corresponding set of object translations are represented as n-tuples of n, at least 2, fields, (e.g. lists of n entries for each object) comprising at least one non-empty translation field for each object.

The n-tuples can also comprise fields relating to user identification information.

Embodiments of the present invention, further comprise more than one set of object translations corresponding to more than one world or more than one virtual world.

In embodiments of the present invention, the data storage means is arranged and/or adapted for allowing access to it by an object set owner for modification of the predetermined set of object identifications and the corresponding set of object translations.

According to a third aspect of the present invention, a machine is disclosed for use in a method according the first aspect, wherein the first world is a virtual world and the second world is a real world, adapted for physically retrieving the extension of the transferred virtual object, having the form and nature of a real object, and transferring it to the user in the real world, hereby adding it to the real world profile of the user.

The real world profile, or virtual world profile, of the user may be any profile of the user, possibly within a specific context, that can be associated to the user in the real/virtual world. The real/virtual world profile of a user may for instance comprise a library-listing, a bank account, a furniture listing of the user in the real/virtual world in appropriate contexts.

In a certain view a profile of a user is a set of modifiable and non modifiable parameters which represent (properties of, or preferences of) the user in a specific context for which the profile is adapted.

Features and embodiments of the different aspects of the present invention, are considered to be applicable for other aspects of the present invention, and are therefore not always repeated explicitly, but they are within the scope of the present invention, as will be recognised by the person of ordinary skill.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

### Brief description of the drawings

The accompanying drawings are used to illustrate embodiments of the present invention.
Fig. 1 illustrates the state of the art.
Figures 2 to 8 illustrate certain embodiments of the present invention.

Reference signs are chosen such that they are the same for similar or equal elements or features in different figures or drawings.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting. E.g. certain elements or features may be shown out of proportion or out of scale with respect to other elements.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

The following example illustrates aspects of the present invention; a person/user goes shopping and buys a telephone, a new sweater etc. According to the state of the art, when he arrives home and enters his virtual world, he will not retrieve this object there and will not be able to share it with his friends.

The user may create it himself for a particular virtual world which is burdensome, or it may be possible to buy a similar object in his virtual world, spending virtual money.

This situation blocks many business model opportunities which could be based on agreements between consumer electronics providers, content providers, and the virtual world providers.

For instance, in the aggregated model (wherein a world provider provides either application programming interfaces ("api's") implemented by other virtual world providers, or a world provider implements api's from other world providers allowing transfer of data and objects between them; in other words, wherein services/applications of the world provider himself and/or of other world providers are hosted in order to transfer, import ,export data or objects to other world providers), users will want to take their virtual objects with them from one world to another. This is interesting for data mining applications and for marketing purposes. This way the relation between certain consumers, their shopping habits and their virtual worlds can be made, which can be a better basis for further marketing or advertisements for other products towards these consumers/users than the one we currently have in the real world.

Since people behave in a virtual world without their boundaries of real life, and assuming that their virtual behavior expresses their real needs and desires, marketing in the real world can benefit of such relationship being identified. The at least partial mapping of objects between the virtual and real world of the user, is made possible according to embodiments of the present invention.

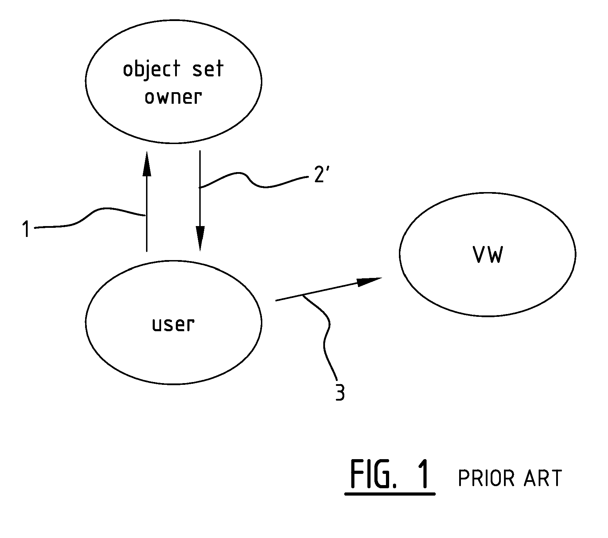

Fig. 1 illustrates a prior art embodiment, wherein the user/customer, which has acquired an object in the real world (2'), cannot retrieve, or automatically find back an object translation for this object in his virtual world (3).

Illustrative embodiments of the present invention are described below. They are based on scenario's in which an object, which a user acquired/bought in a (for instance real) shop, has an OID (object identification - for instance an RFID), and is to be extended in a second, for instance virtual, world of the user.

All objects of the shop, or at least those which are for instance specifically identified as "virtually extendable", for instance by carrying an appropriate label, have been translated, provided with an object identification, organized and stored in a data storage means (step 0 in the embodiments below), which can communicate with or can be consulted by the world provider (The world provider can be a service and/or content provider which delivers the virtual/real world environment and/or content to the user). The information stored in the data storage means is complete in the sense that every object in the shop, which is identified as "virtually extendable", is mapped into the data storage means by providing an object ID and at least one translation of the object. The user identification, associated with an object, can also be comprised for some of the objects or for each object mapped in the data storage means, in corresponding embodiments.

Please note that in the drawings of the present application the second and further worlds are indicated as "VW" (Virtual World), but that in appropriate cases the "VW", may be replaced with "RW", the real world.

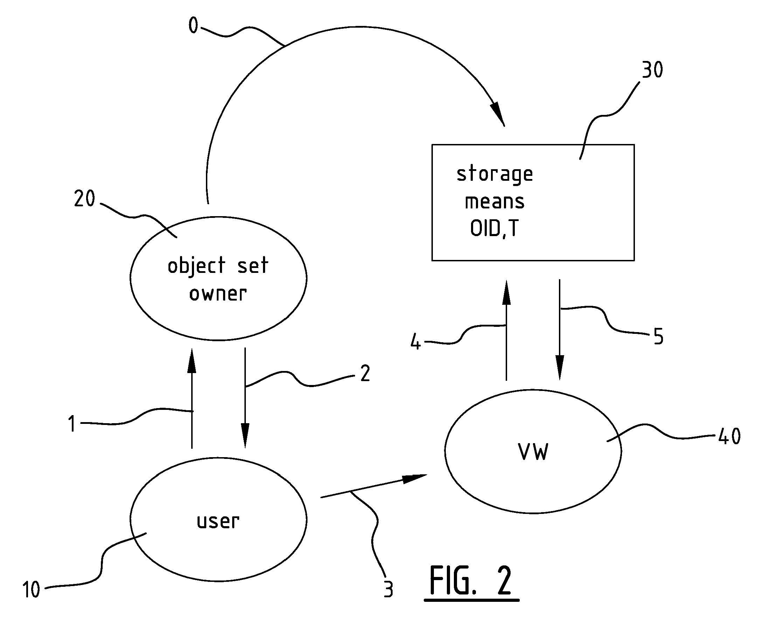

In figure 2 an embodiment is depicted in which a user /customer 10 acquires an object in a store (object set owner 20). During the acquisition (1), no user ID is provided by the user to the object set owner. The object set owner provides the object ID to the user 10 (2) and the user can then (3) provide the object ID to his (virtual) world provider 40, after a log in step in the user's virtual world. The (virtual) world provider 40 can then provide the selected object ID to the storage means 30 (4), after which the storage means then delivers the selected object translation (5) to the virtual world, and/or the profile of the user in the virtual world. It is to be noted that the storage means does not necessarily comprise a user ID in this embodiment. The storage means 30 preferably comprises n-tuples comprising object ID and translation information for all the objects of the object set owner.

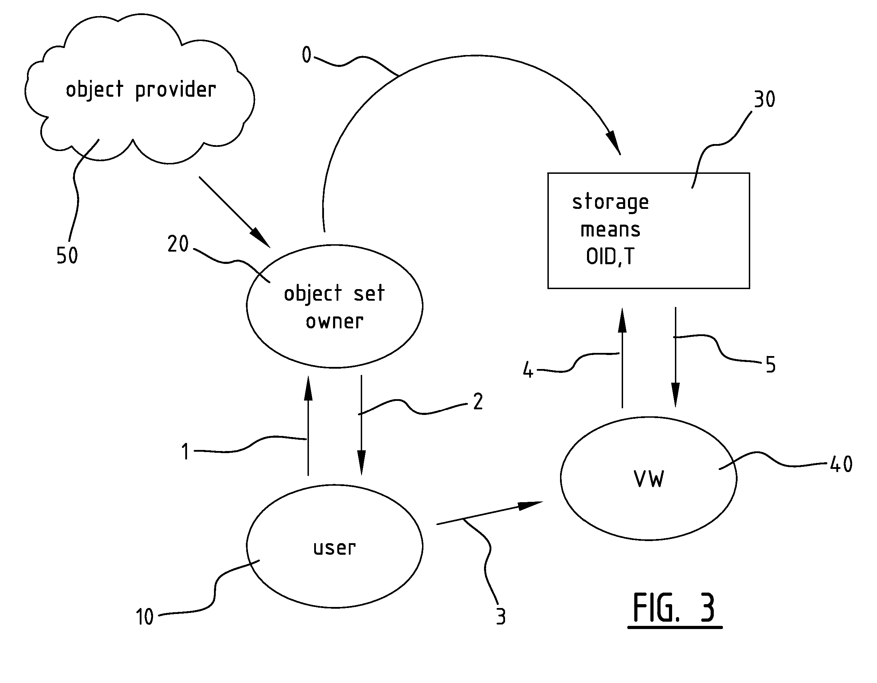

In figure 3 the object set owner receives the object identifications from an object provider 50, removing the necessity for the object set owner of translating (part of) said objects. The scenario in figure 3 further corresponds to the scenario of figure 2.

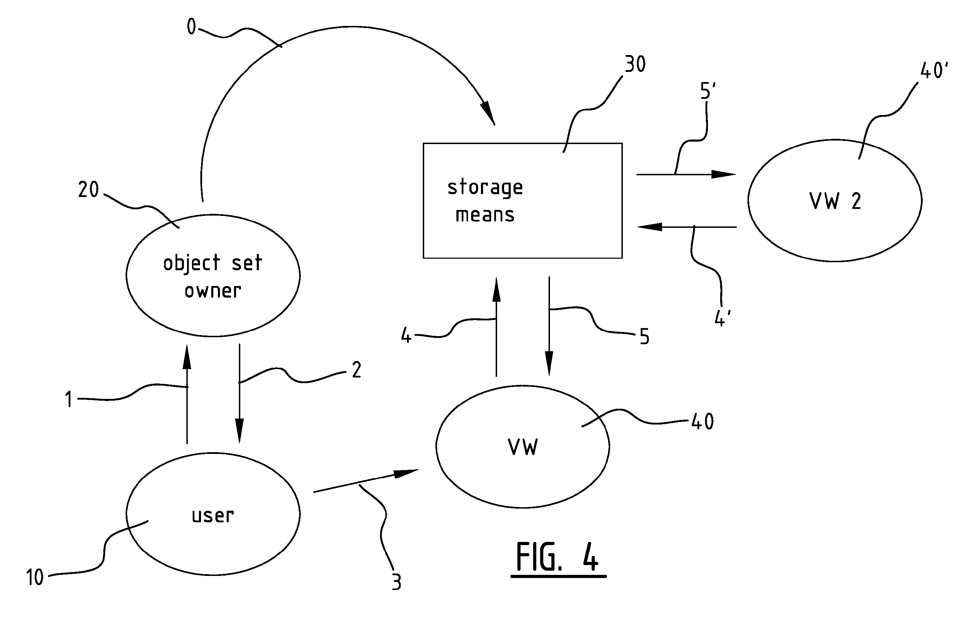

In figure 4 a similar scenario is depicted, in which it is further illustrated that the storage means 30 can be adapted or arranged such that it may communicate/provide translation information to different virtual world providers (VW2).

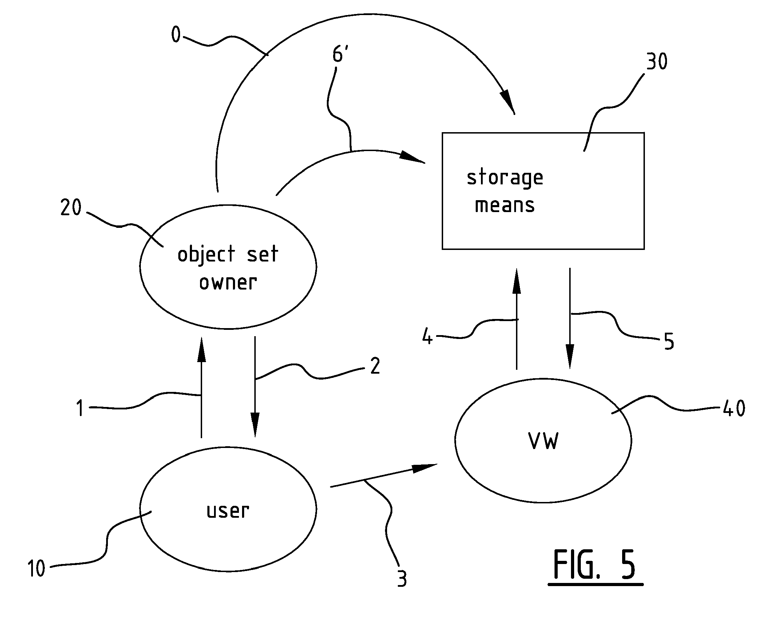

In figure 5 a further embodiment is disclosed, based on the embodiments 2 to 4. In this embodiment a further confirmation step is performed by the object set owner 20 to the storage means 30(6'), such that when the user logs in into his virtual world (3) and tries to retrieve his translation of the real object by providing the selected object identification to the world provider 40 which forwards the OID to the storage means 30. The storage means may perform a security check avoiding that stolen objects may be extended into the virtual world.

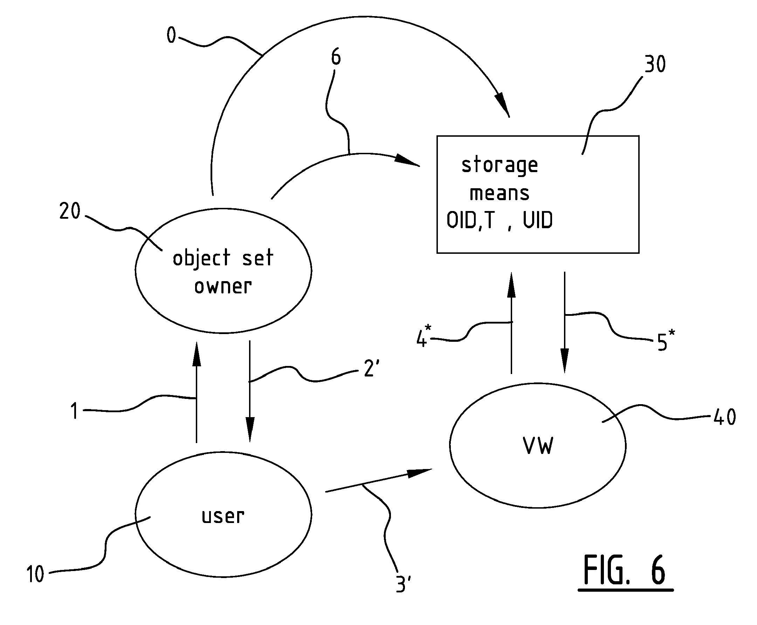

In figure 6 a further embodiment of the present invention is depicted. A user 10 acquires an object from an object set owner 20, and further provides his user ID to the object set owner (1). The object set owner provides the object to the user but does not provide an object ID to the user (2'). Instead, the object set owner 20 forwards the corresponding object ID and user ID received from the user to the storage means 30 (6), which now additionally comprises user ID information for particular object IDs, which are already foreseen from translation information. When the user 10 then performs the log in into his virtual world 40, not providing an object ID (3'), the virtual world provider can retrieve, based on the user ID of the user, received by the log in procedure, the corresponding object IDs and translations from the storage means 30(4*, 5*). Once the object translation has been retrieved from the storage means it may be added to the user profile in the second world (e.g. virtual world).

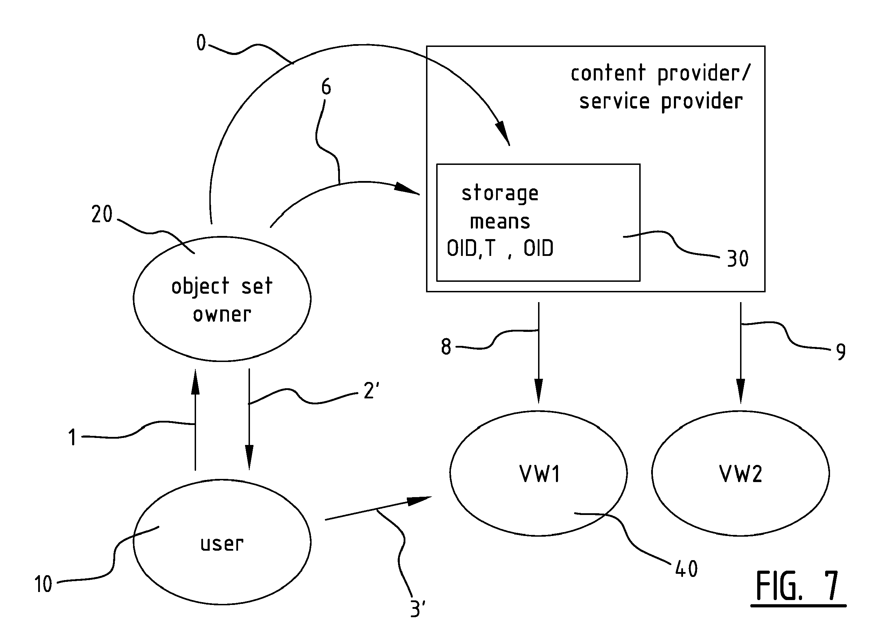

Figure 7 illustrates an embodiment in which an object, which a user acquired/bought in a store, has an RFID (object identification (OID)). The unique combination of RFID, known by the object set owner, and the Electronic Identification (EID, being an example of a user identification (UID)) of the user, which is passed on from the user via the object set owner to a content and/or service provider managing a storage means, may allow the user to have the virtual extension of the real world object pushed to his virtual world, by a the content/service provider who has an agreement with the object set owner and the world provider.

The embodiment of the present invention depicted in figure 7, is similar to the embodiment of figure 6. The user 10 acquires an object from the object set owner 20 and further provides its user ID to the object set owner (2')(1). The user 10 receives the object in the first world from the object set owner, but does not necessarily receive the object ID of the selected object. The object set owner then forwards the object ID and user ID associated to the selected object to the storage means 30, which is in this case managed, and/or located at a content/service provider. The service provider, or if appropriate the storage means itself which may be adapted and arranged to perform such functionality, can then push the user ID, the translation of the selected object and optionally the object ID to the virtual world of the user (8,9) (VW1,VW2). The user will now, after performing an authentication procedure for a virtual world 1, respectively virtual world 2, comprising providing his user ID to the respective virtual world (3') automatically retrieve the extension of the selected object in these virtual worlds.

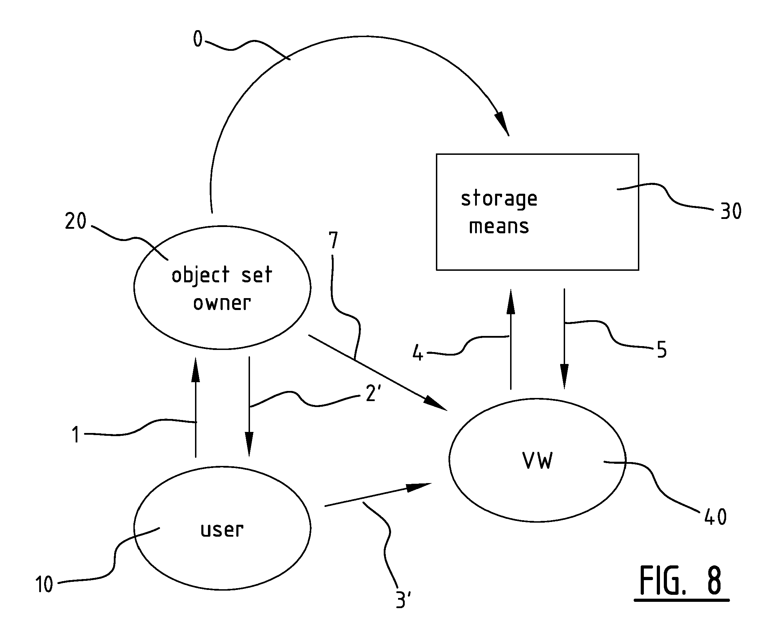

In figure 8 yet another embodiment of the present invention is illustrated. Here, the user provides his user ID to the object set owner 20 when acquiring a selected object of the object set owner 20 (1), receives the object, but does not necessarily receives the corresponding object ID (2'). Different from the scenarios depicted in figures 6 and 7, the object set owner provides the user ID and object ID to the virtual world provider 40 (7). The virtual world provider 40 may retrieve the translation (5) of the selected object from the storage means 30 by providing the object identification received from the object set owner to the storage means (4). When the user authorizes himself, if applicable, or enters his virtual world (3') he may then retrieve the extension of the selected object, without the need for providing an object ID to the virtual world provider himself. It is to be noted that the retrieval of the object translation for the selected object from the storage means 30 by the virtual world 40 can also be performed after the user has entered/performed log in to his virtual world.

It is to be noted that multiple virtual worlds (or world providers) may be connected to a common data storage means which comprises translations of real objects, together with their corresponding object identifications.

A virtual world could act as a peer or a super node in a peer to peer (P2P) network existing of many virtual worlds. Transfer of a virtual object which was pushed or imported in a virtual world to another virtual world could then be realized by means of P2P. This technical solution can be used to exchange the object(s) or data between different virtual worlds. Each virtual world can have its own storage means containing object(s) or related data linked to user profiles. This info can directly be uploaded by the virtual world provider, or can be uploaded to an independent storage means and then be downloaded by another virtual world provider. The independent storage can then act as a node or peer in the P2P network.

It is further to be noted that user identification (UID)translation or mapping may additionally be performed at appropriate steps of any of the methods according to embodiments of the present invention. A user identification translating means may thus be provided in the described systems.

Embodiments according to the present invention can provide for instance the following;
- on- and offline trading for virtual objects;
- online trading of real objects in a virtual world;
- transfer of virtual objects from one Virtual world to another in aggregated (virtual world enables import and export objects from and to other virtual worlds and from and to external storage means) - and non-aggregated (VW imports objects from storage means) mode;
- enables new business models for service- and content providers.

While some embodiments described herein include some but not other features included in other embodiments, combinations of features of different embodiments are meant to be within the scope of the invention, and form different embodiments, as would be understood by the skilled person.

While the principles of the invention have been described by means of functional blocks, their detailed realisation based on this functional description should be obvious for a person skilled in the art and is therefore not described.

Some functions have been mentioned herein. They can be implemented using software, firmware (for instance fixed logic circuitry), hardware, manual processing, or any combination of these implementations. The terms "module," "component", "functionality", and "logic" as generally represent software, firmware, hardware, or any combination thereof. In software implementation cases, the module, component, functionality, or logic represents program code that performs specified tasks when executed on one or more processor(s) (for instance any of microprocessors, controllers, and the like). The program code can be stored in at least one computer readable memory device or storage means. The methods and systems are platform-independent and they may thus be implemented on different platforms.

Methods according to embodiments of the present invention may also be described in the context of computer executable instructions. Computer executable instructions can include routines, programs, objects, components, data structures, procedures, modules, functions, and the like for performing certain functions or implement certain abstract data types. The methods described herein may also be applicable in a distributed computing environment where functions are performed by remote processing devices that are linked through a communications network. In a distributed computing environment, computer executable instructions may be located in both local and remote computer storage media, including memory storage devices.

While the principles of the invention have been set out above in connection with specific embodiments, it is to be clearly understood that this description is merely made by way of example and not as a limitation of the scope of protection which is determined by the appended claims.

## Claims

1. A method for associating an object in a first world with an extension of said object in a second world, comprising ;
- defining a predetermined set of objects in said first world;
- generating a unique identification for each object of said predetermined set of objects;
- generating an object translation adapted for use in said second world, for each object of said predetermined set of objects;
- storing said unique identification and said translation for said predetermined set of objects in a data storage means;
- transferring a selected object of said predetermined set of objects, selected by a user, having a user profile in a second world, to said user in said first world;
- providing an extension of said selected object into said second world, said extension comprising at least said respective selected object translation, by retrieving said selected object translation in said data storage means and adding it to said user profile in said second world, based on said selected object identification.

2. A method according to claim 1, wherein said second world is controlled by a second world provider, and wherein said predetermined set of objects is owned by a object set owner, comprising;
- providing said selected object identification to the user by the object set owner;
- providing said selected object identification to said second world provider by the user;
- providing said selected object identification to said storage means by said second world provider;
- providing said translation of said selected object to said second world provider by said storage means.

3. A method according to claim 2, further comprising providing said selected object identification by said object set owner to said data storage means, confirming the transfer of the object to the user in the first world.

4. A method according to claim 1, wherein said second world is controlled by a world provider, and wherein said predetermined set of objects is owned by a object set owner, comprising:
- providing a user identification to said object set owner by said user;
- providing said user identification and said selected object identification to said storage means by said object set owner;
- logging in by the user in said second world, comprising providing said user identification to said second world provider;
- retrieving said selected object translation by said second world provider from said data storage means, based on said user identification.

5. A method according to claim 1, wherein said second world is controlled by a world provider, and wherein said predetermined set of objects is owned by a object set owner, comprising
- providing a user identification to said object set owner by said user;
- providing said user identification and said selected object identification to said storage means by said object set owner;
- logging in by the user in said second world, comprising providing said user identification to said second world provider;
- pushing said selected object translation from said storage means to said second world provider based on said user identification.

6. A method according to claim 1, wherein said second world is controlled by a world provider, and wherein said predetermined set of objects is owned by a object set owner, comprising
- providing a user identification to said object set owner by said user;
- providing said user identification and said selected object identification to said second world provider;
- retrieving said selected object translation from said data storage means by said second world provider, based on said object identification.

7. A method according to any of the previous claims, wherein said translation comprises information allowing a visual representation of the object in said second world.

8. A method according to any of the previous claims, wherein said translation comprises value information for the object in said second world.

9. A method according to any of the previous claims, wherein said first world is the real world and said second world is a virtual world.

10. A method according to any of the previous claims, wherein said first world is a virtual world and said second world is a real world.

11. A data storage means, comprising a predetermined set of object identifications and a corresponding set of object translations, arranged and/or adapted for allowing access to it by a virtual world provider.

12. A data storage means according to claim 11, wherein said predetermined set of object identifications and said corresponding set of object translations are represented as n-tuples of n, at least 2, fields, comprising at least one non-empty translation field for each object.

13. A data storage means according to claim 11 to 13, comprising more than one set of object translations corresponding to more than one world.

14. A data storage means according to claim 11 to 14, arranged and/or adapted for allowing access to it by a object set owner for modification of said predetermined set of object identifications and said corresponding set of object translations.

15. A machine for use in a method according to any of the previous method claims, in as far as dependent on claim 10, adapted for physically retrieving said extension of the transferred virtual object, having the form of a real object, and transferring to said user in the real world, hereby adding it to said real world profile of said user.
